# EUROPÄISCHE PATENTSCHRIFT

(11) **EP 3 936 828 B1**
(45) Veröffentlichungstag und Bekanntmachung des Hinweises auf die Patenterteilung: **23.08.2023**
(21) Anmeldenummer: 21183707.5
(22) Anmeldetag: 05.07.2021
(51) Int. Cl.: G01D 5/14, G01D 5/245

(54) **GEBERSYSTEM FÜR EINEN ANTRIEB**
ENCODING SYSTEM FOR A TRANSMISSION
SYSTÈME DE CAPTEUR POUR UN ENTRAÎNEMENT

(30) Priorität: 09.07.2020 DE 102020118174
(43) Veröffentlichungstag der Anmeldung: 12.01.2022
(73) Patentinhaber: WITTENSTEIN SE, 97999 Igersheim (DE)
(72) Erfinder: Gromes, Tobias, 97990 Laudenbach (DE); Kruse, Ralf, 97072 Würzburg (DE); Gröning, Ingolf, 97980 Bad Mergentheim (DE)
(74) Vertreter: Zimmermann & Partner Patentanwälte mbB

(56) Entgegenhaltungen:
- EP-A1- 3 534 121
- EP-A2- 1 607 720
- WO-A1-2019/188859
- DE-A1-102009 019 719
- US-A1- 2012 146 627

## Beschreibung

### Gebiet der Erfindung

Die Offenbarung betrifft ein Gebersystem für einen Antrieb und einen Elektromotor.

### Stand der Technik

Aus dem Stand der Technik sind Gebersysteme bekannt, welche einen magnetischen Umdrehungszähler (Multiturn-Geber) und einen magnetischen Positionsgeber (Singleturn-Geber) umfassen. Üblicherweise ist ein Umdrehungszähler eingerichtet, die Umdrehungen einer Welle eines Motors zu zählen. Ein Positionsgeber bestimmt üblicherweise eine Winkelstellung der Welle. Häufig sind jeweilige Magnetkreise und Magnetsensoren des Umdrehungszählers und des Positionsgebers räumlich voneinander getrennt, um eine Verzerrung der Magnetfelder des jeweils anderen Gebers zu vermeiden.

EP 3 534 121 A1 betrifft einen Multiturn-Drehgeber. US 2012/0146627 A1 bezieht sich auf einen multiperiodischen absoluten Positionssensor. DE 10 2009 019 719 A1 betrifft eine energieautarke magnetische Erfassungsanordnung. EP 1 607 720 A2 bezieht sich auf einen Lenkwinkelsensor. WO 2019/188859 A1 betrifft eine Encodervorrichtung.

Allerdings benötigen die aus dem Stand der Technik bekannten Gebersysteme einen großen Bauraum, weisen einen großen Durchmesser oder ein großes Trägheitsmoment auf, weisen eine geringe Genauigkeit auf, oder sind nur zur Anordnung an einem Wellenende vorgesehen.

### Offenbarung der Erfindung

Aufgabe der Offenbarung ist es, ein Gebersystem für einen Antrieb und einen Elektromotor anzugeben, welche gegenüber dem Stand der Technik verbessert sind. Insbesondere sollte ein Gebersystem angegeben werden, welches besonders raumsparend aufgebaut oder verbaut werden kann oder ein geringes Trägheitsmoment aufweist, eine hohe Genauigkeit aufweist, oder welches eine einfache Herstellung oder Montage erlaubt.

Die Aufgabe wird mit einem Gebersystem für einen Antrieb gemäß Anspruch 1 sowie mit einem Elektromotor und einem Gebersystem nach den nebengeordneten Ansprüchen gelöst.

Gemäß einem Aspekt wird ein Gebersystem für einen Antrieb angegeben, umfassend einen Umdrehungszähler mit einem an einem feststehenden Teil des Gebersystems angeordneten Wiegandsensor und mindestens zwei an verschiedenen Positionen in Umlaufrichtung an einem rotierbaren Teil des Gebersystems angeordneten Magnetpaaren, wobei die Magnetpaare jeweils einen ersten Magneten und einen zweiten Magneten umfassen; und einen Positionsgeber mit einem an dem feststehenden Teil angeordneten Magnetfeldsensor und einem an dem rotierbaren Teil angeordneten Magnetband; wobei je Magnetpaar der erste Magnet, das Magnetband des Positionsgebers und der zweite Magnet bezüglich einer ersten Richtung in dieser Reihenfolge an dem rotierbaren Teil angeordnet sind.

Gemäß einem weiteren Aspekt wird ein Elektromotor angegeben, mit einer Welle und einem Gebersystem nach hierin beschriebenen Ausführungsformen.

Ein typisches Gebersystem für einen Antriebumfasst einen Umdrehungszähler mit einem ersten Sensor, wobei der erste Sensor auf einer ersten Sensorplatine des Gebersystems angeordnet ist; einen Positionsgeber mit einem zweiten Sensor, wobei der zweite Sensor auf einer zweiten Sensorplatine des Gebersystems angeordnet ist; und eine Basisplatine, welche zur Verbindung mit einem Gehäuse des Antriebs eingerichtet ist; wobei die erste Sensorplatine und die zweite Sensorplatine mit der Basisplatine unmittelbar verbunden sind.

Typische Ausführungsformen des Gebersystems sind eingerichtet für einen Antrieb, insbesondere für eine elektrische Maschine, beispielsweise für einen Elektromotor oder ein Getriebe.

Bei typischen Ausführungsformen umfasst das Gebersystem einen Umdrehungszähler und einen Positionsgeber. Bei typischen Ausführungsformen basieren der Umdrehungszähler und der Positionsgeber jeweils auf einem magnetischen Messprinzip. Insbesondere ist der Umdrehungszähler als magnetischer Umdrehungszähler ausgeführt. Der Umdrehungszähler ist typischerweise eingerichtet, Umdrehungen einer Welle des Antriebs zu zählen. Unter "Umdrehungen" sind hierin beispielsweise volle Umdrehungen, halbe Umdrehungen, Viertelumdrehungen oder Achtelumdrehungen zu verstehen. Der Umdrehungszähler kann eingerichtet sein, Umdrehungen drehrichtungsspezifisch zu zählen.

Typischerweise umfasst der Umdrehungszähler einen Wiegandsensor. Ein Wiegandsensor, auch Impulsdrahtsensor, umfasst typischerweise einen Wiegand-Draht und eine Wiegandspule. Die Wiegandspule kann beispielsweise um den Wiegand-Draht angeordnet sein. Ein Wiegand-Draht weist typischerweise parallele weich- und hartmagnetische Bereiche auf. Insbesondere weist der Wiegand-Draht eine Hysteresekurve mit meist zwei ausgeprägten Sprungstellen auf. Insbesondere kann bei Änderung eines Magnetfeldes in oder um den Wiegand-Draht eine Art makroskopischer Barkhausen-Effekt auftreten, gemeinhin bekannt als Wiegand-Effekt. Eine plötzliche Änderung der Magnetisierung des Wiegand-Drahtes kann in der Wiegandspule einen Spannungsimpuls induzieren, dessen Größe und Form nicht davon abhängt, wie schnell das äußere Magnetfeld sich ändert. Typischerweise ist der Wiegandsensor eingerichtet, in spannungsbetriebenem Zustand des Gebersystems oder in spannungslosem Zustand des Gebersystems, insbesondere in spannungsbetriebenem Zustand und in spannungslosem Zustand, Umdrehungen der Welle zu zählen. Wird die Welle des Antriebs gedreht, kann ein drehfest mit der Welle verbundener Magnet oder ein Magnetpaar ein veränderliches Magnetfeld am ortsfest angebrachten Wiegandsensor erzeugen. Ein erzeugter Spannungspuls indiziert beispielsweise eine zumindest teilweise Umdrehung der Welle, insbesondere eine halbe Umdrehung, eine Viertelumdrehung oder eine Achtelumdrehung. Bei Ausführungsformen können die Spannungspulse dazu verwendet werden, die Umdrehungen in einem nichtflüchtigen Speicher zu speichern.

Bei typischen Ausführungsformen ist der Wiegandsensor an dem feststehenden Teil des Gebersystems angeordnet. Der feststehende Teil des Gebersystems ist typischerweise zur drehfesten Verbindung mit einem Gehäuse des Antriebs eingerichtet oder drehfest mit dem Gehäuse verbunden. Insbesondere rotiert der feststehende Teil nicht mit einer Welle des Antriebs. Beispielsweise kann der Wiegandsensor auf oder an einer ersten Sensorplatine des Gebersystems angeordnet sein.

Typischerweise umfasst der Umdrehungszähler mindestens zwei Magnetpaare. Die Magnetpaare sind typischerweise an dem rotierbaren Teil des Gebersystems angeordnet. Der rotierbare Teil des Gebersystems ist typischerweise zur drehfesten Verbindung mit einer Welle des Antriebs eingerichtet oder drehfest mit der Welle verbunden. Typischerweise ist der rotierbare Teil des Gebersystems um eine Drehachse des Gebersystems rotierbar. Insbesondere kann die Drehachse zumindest im Wesentlichen einer Wellenachse einer Welle des Antriebs entsprechen.

Bei typischen Ausführungsformen sind die mindestens zwei Magnetpaare in Umlaufrichtung an verschiedenen Positionen angeordnet. Beispielsweise können zwei Magnetpaare gegenüberliegend angeordnet sein. Typischerweise umfasst der Umdrehungszähler zwei, vier oder acht Magnetpaare. Insbesondere können die Magnetpaare gleichmäßig in Umlaufrichtung oder in Umlaufrichtung an äquidistanten Positionen angeordnet sein.

Bei typischen Ausführungsformen umfassen die Magnetpaare jeweils einen ersten Magneten und einen zweiten Magneten. Der erste Magnet eines Magnetpaars und der zweite Magnet des Magnetpaars sind typischerweise in Umlaufrichtung zumindest im Wesentlichen an derselben Position angeordnet. Typischerweise ist ein erstes magnetisches Dipolmoment des ersten Magneten zumindest im Wesentlichen antiparallel zu einem zweiten magnetischen Dipolmoment des zweiten Magneten ausgerichtet. Bei weiteren Ausführungsformen können die Dipolmomente des ersten und des zweiten Magneten in anderen Winkellagen ausgerichtet sein, um einen Magnetkreis mit ersten Feldlinien zu erzeugen.

Das erste magnetische Dipolmoment und das zweite magnetische Dipolmoment sind typischerweise zumindest im Wesentlichen senkrecht zu einer Verbindungsachse des ersten Magneten und des zweiten Magneten ausgerichtet. Unter zumindest im Wesentlichen senkrecht, zumindest im Wesentlichen parallel, zumindest im Wesentlichen antiparallel ist hierin insbesondere eine genau senkrechte, parallele oder antiparallele Ausrichtung oder eine Abweichung von maximal 15°, insbesondere von maximal 10° oder von maximal 5°, von einer genau senkrechten, parallelen oder antiparallelen Ausrichtung zu verstehen.

Typischerweise sind jeweils die ersten Magnete und die zweiten Magnete in Umlaufrichtung mit wechselnder Polarität angeordnet. Insbesondere erzeugen die Magnetpaare bei Drehung der Welle am Ort des Wiegandsensors wechselnd gegensätzlich gerichtete Magnetfelder. Der erste Magnet und der zweite Magnet sind typischerweise Permanentmagnete, insbesondere Permanentmagnete mit hoher Energiedichte und Remanenzinduktion, beispielweise Magnete enthaltend Neodym, insbesondere Neodym-Eisen-Bor-Magnete. Typischerweise sind der erste Magnet und der zweite Magnet als Blockmagnete ausgeführt.

Typische Gebersysteme umfassen einen Positionsgeber, insbesondere einen magnetischen Positionsgeber. Der Positionsgeber ist typischerweise eingerichtet, eine Absolutposition der Welle, beispielsweise eine Winkelausrichtung der Welle, zu bestimmen. Typischerweise umfasst der Positionsgeber einen Magnetfeldsensor. Der Magnetfeldsensor ist typischerweise an dem feststehenden Teil des Gebersystems angeordnet, beispielsweise an einer zweiten Sensorplatine des Gebersystems. Bei typischen Ausführungsformen ist der Magnetfeldsensor als Hall-Sensor oder als Hall-Sensor-Array, beispielsweise mit 4 Hall-Sensoren oder 8 Hall-Sensoren oder einer anderen Anzahl Hall-Sensoren, oder als Sensorspule oder als MR-Sensoren (magnetoresistiv) oder als GMR-Sensor (giant magnetoresistance) oder als GMR-Sensor-Array ausgeführt.

Bei typischen Ausführungsformen umfasst der Positionsgeber ein Magnetband. Das Magnetband ist typischerweise umlaufend um die Welle oder um den rotierbaren Teil des Gebersystems ausgeführt. Typischerweise beträgt ein Luftspalt zwischen dem Magnetband und dem Magnetfeldsensor höchstens 1 mm, insbesondere höchstens 0,7 mm oder höchstens 0,5 mm, oder mindestens 0,1 mm, insbesondere mindestens 0,2 mm. Ein geringer Luftspalt zwischen dem Magnetband und dem Magnetfeldsensor kann eine besonders genaue Bestimmung der Magnetfelder des Magnetbandes durch den Magnetfeldsensor ermöglichen.

Bei typischen Ausführungsformen umfasst das Magnetband mindestens zwei Magnetspuren, beispielsweise genau zwei oder genau drei Magnetspuren. Typischerweise weisen die Magnetspuren jeweils in Umlaufrichtung magnetische Abschnitte wechselnder Polarität auf. Die Magnetspuren sind typischerweise schwachmagnetisch aufmagnetisiert. Beispielsweise können die magnetischen Abschnitte der Magnetspuren Ferrit, insbesondere Hartferrit umfassen oder aus Ferrit bestehen.

Typischerweise weist das Magnetband in Umlaufrichtung eine Codierung auf, insbesondere eine magnetische Codierung. Die Codierung ist typischerweise zur magnetischen Maßverkörperung geeignet, insbesondere zur Bestimmung der Absolutposition der Welle. Das Magnetband, insbesondere die mindestens zwei Magnetspuren, kann zum Beispiel eine Nonius-Codierung (Vernier-Codierung) oder eine Gray-Codierung aufweisen. Beispielsweise kann das Magnetband zwei Magnetspuren mit Teilungen nach dem Nonius-Prinzip aufweisen. Beispielsweise kann das Magnetband zwei Magnetspuren mit Teilungen aufweisen, die sich in der Anzahl der Polpaare um 1 unterscheiden. Zum Beispiel kann eine erste Magnetspur 63 Polpaare und eine zweite Magnetspur 64 -Polpaare aufweisen. Typischerweise wird eine Absolutposition oder Winkelstellung der Welle basierend auf einer eindeutigen Phasenbeziehung der an den jeweiligen Magnetspuren gemessenen Magnetfelder durch einen Algorithmus bestimmt, beispielsweise durch einen Nonius-Algorithmus. In anderen Ausführungsformen kann das Magnetband drei oder noch mehr Spuren aufweisen.

Bei typischen Ausführungsformen sind je Magnetpaar der erste Magnet, das Magnetband des Positionsgebers und der zweite Magnet bezüglich einer ersten Richtung in dieser Reihenfolge an dem rotierbaren Teil angeordnet. Insbesondere ist das Magnetband bezüglich der ersten Richtung zwischen dem ersten Magneten eines Magnetpaares und dem zweiten Magneten des Magnetpaares angeordnet. Die erste Richtung kann beispielsweise je Magnetpaar in Richtung einer Verbindungsachse zwischen dem ersten Magneten und dem zweiten Magneten gerichtet sein. Typischerweise ist die erste Richtung axial oder radial ausgerichtet. Eine Anordnung des Magnetbandes zwischen einem ersten Magneten und einem zweiten Magneten kann insbesondere den Vorteil bieten, dass das Gebersystem besonders kompakt aufgebaut werden kann.

Bei typischen Ausführungsformen umfasst das Gebersystem mindestens ein zwischen dem jeweils ersten Magneten und dem Magnetband oder zwischen dem jeweils zweiten Magneten und dem Magnetband angeordnetes erstes Ableitelement aus magnetisch leitfähigem Material. Insbesondere ist das mindestens eine erste Ableitelement je Magnetpaar bezüglich der ersten Richtung zwischen dem ersten Magneten und dem Magnetband oder zwischen dem zweiten Magneten und dem Magnetband angeordnet. Insbesondere sind zwei erste Ableitelemente je Magnetpaar bezüglich der ersten Richtung zwischen dem ersten Magneten und dem Magnetband und zwischen dem zweiten Magneten und dem Magnetband angeordnet.

Typischerweise ist das mindestens eine erste Ableitelement an dem rotierbaren Teil angeordnet. Beispielsweise können erste Ableitelemente in Umlaufrichtung jeweils an den Positionen der Magnetpaare angeordnet sein. Insbesondere können die ersten Ableitelemente jeweils gleich ausgeführt sein oder jeweils gleich bezüglich der Magnetpaare angeordnet sein. Bei weiteren typischen Ausführungsformen ist das mindestens eine erste Ableitelement umlaufend um den rotierbaren Teil des Gebersystems angeordnet. Typischerweise kann das mindestens eine erste Ableitelement zumindest im Wesentlichen ringförmig oder als Scheibe ausgebildet sein. Insbesondere kann das mindestens eine erste Ableitelement koaxial mit der Drehachse des Gebersystems angeordnet sein.

Typischerweise umfasst oder besteht das mindestens eine erste Ableitelement aus magnetisch leitfähigem Material. Unter magnetisch leitfähigem Material ist hierin insbesondere ferromagnetisches Material oder ferrimagnetisches Material zu verstehen. Typischerweise ist das mindestens eine erste Ableitelement eingerichtet, je Magnetpaar Streufelder des ersten Magneten oder des zweiten Magneten abzuleiten. Beispielsweise ist das mindestens eine erste Ableitelement eingerichtet, die Streufelder in eine zweite Richtung abzuleiten, wobei die zweite Richtung zumindest im Wesentlichen senkrecht zu der ersten Richtung ausgerichtet ist. Insbesondere ist das mindestens eine erste Ableitelement eingerichtet, die Streufelder so abzuleiten, dass die Streufelder am Ort des Magnetbandes oder am Ort des Magnetfeldsensors reduziert sind.

Bei typischen Ausführungsformen umfasst das Gebersystem ein an dem feststehenden Teil angeordnetes zweites Ableitelement aus magnetisch leitfähigem Material. Typischerweise ist der Magnetfeldsensor des Positionsgebers bezüglich einer zweiten Richtung, welche zumindest im Wesentlichen senkrecht zu der ersten Richtung ausgerichtet ist, zwischen dem Magnetband und dem zweiten Ableitelement angeordnet. Insbesondere liegt die zweite Richtung in einer Schnittfläche, welche sich durch den Magnetfeldsensor und entlang der Drehachse der Welle erstreckt. Typischerweise ist das zweite Ableitelement als Block oder als Platte ausgeführt. In Ausführungsformen umfasst oder besteht das zweite Ableitelement aus Ferrit, beispielsweise aus weichmagnetischem Ferrit. Das zweite Ableitelement kann an der zweiten Sensorplatine angeordnet sein. Bei Ausführungsformen ist das zweite Ableitelement mit der zweiten Sensorplatine verbunden. Beispielsweise kann das zweite Ableitelement mit der zweiten Sensorplatine verklebt oder verlötet sein.

Bei typischen Ausführungsformen erstreckt sich das zweite Ableitelement bezüglich der ersten Richtung mindestens über einen Bereich des Magnetbandes, insbesondere mindestens über einen Bereich zwischen zwei ersten Ableitelementen. Bei einer axial ausgerichteten ersten Richtung ist unter einem "Bereich" in diesem Zusammenhang insbesondere ein axialer Bereich, bei einer radial ausgerichteten ersten Richtung insbesondere ein radialer Bereich zu verstehen. Typischerweise ist das zweite Ableitelement eingerichtet, magnetische Streufelder um den Magnetfeldsensor des Positionsgebers zu leiten, insbesondere zumindest im Wesentlichen parallel zu der ersten Richtung.

Typischerweise umfasst der rotierbare Teil einen Träger aus magnetisch leitfähigem Material, wobei das Magnetband und die mindestens zwei Magnetpaare auf dem Träger angeordnet sind. Typischerweise ist der Träger eingerichtet, magnetische Streufelder um den Magnetfeldsensor oder das Magnetband zu leiten, insbesondere zumindest im Wesentlichen parallel zu der ersten Richtung. Bei Ausführungsformen ist zwischen dem Magnetband und dem Träger ein Magnetbandträger angeordnet. Der Magnetbandträger kann aus magnetisch leitfähigem Material bestehen.

Bei typischen Ausführungsformen ist der Magnetfeldsensor des Positionsgebers durch ein Abschirmsystem des Gebersystems gegen magnetische Störfelder abgeschirmt. Typischerweise umfasst das Abschirmsystem mindestens eines aus der Gruppe des mindestens einen ersten Ableitelements, des zweiten Ableitelements und des Trägers. Beispielsweise umfasst das Abschirmsystem mindestens jeweils ein erstes Ableitelement zwischen den ersten Magneten der Magnetpaare und dem Magnetband und zwischen den zweiten Magneten der Magnetpaare und dem Magnetband, ein zweites Ableitelement und einen Träger. Zum Beispiel kann das Abschirmsystem dazu eingerichtet sein, einen schwachen Magnetkreis des Positionsgebers in einen starken Magnetkreis des Umdrehungszählers zu verschachteln. Insbesondere können Störfelder um den Magnetfeldsensor des Positionsgebers abgeleitet werden. Störfelder können insbesondere Streufelder der Magnetpaare oder äußere Störfelder umfassen. Äußere Störfelder können beispielsweise aus dem Betrieb des Antriebs, insbesondere eines Elektromotors, stammen oder aus externer elektromagnetischer Strahlung. Ein Abschirmen des Magnetfeldsensors gemäß hierin beschriebenen Ausführungsformen kann den Vorteil haben, dass eine Absolutposition der Welle mit hoher Genauigkeit bestimmt werden kann. Insbesondere kann eine hohe Genauigkeit bei einem geringen Bauvolumen des Gebersystems erreicht werden.

Typischerweise liegt das Verhältnis einer ersten magnetischen Remanenzinduktion des Magnetbandes zu einer zweiten magnetischen Remanenzinduktion eines ersten Magneten eines Magnetpaars oder eines zweiten Magneten eines Magnetpaars bei mindestens 1:15, insbesondere bei mindestens 1:10 oder bei mindestens 1:8, oder bei höchstens 1:2, insbesondere bei höchstens 1:3 oder bei höchstens 1:4. Insbesondere kann das Verhältnis zwischen 1:10 und 1:3 liegen. Beispielsweise kann eine erste magnetische Remanenzinduktion des Magnetbandes bei 0,1 T bis 0,4 T liegen. Eine zweite magnetische Remanenzinduktion eines ersten Magneten oder eines zweiten Magneten kann beispielsweise bei 0,8 T bis 1,5 T liegen.

Bei typischen Ausführungsformen sind der Wiegandsensor und der Magnetfeldsensor in Umlaufrichtung um die Drehachse des rotierbaren Teils versetzt zueinander angeordnet. Typischerweise sind der Wiegandsensor und der Magnetfeldsensor um mindestens den halben Winkelabstand zwischen zwei in Umlaufrichtung benachbarten Magnetpaaren versetzt zueinander angeordnet. Beispielsweise sind der Wiegandsensor und der Magnetfeldsensor bei einer Ausführungsform mit acht Magnetpaaren um mindestens 22,5° voneinander versetzt angeordnet, bei vier Magnetpaaren um mindestens 45° versetzt. Durch einen Mindestversatz in Umlaufrichtung kann beispielsweise am Ort des Wiegandsensors eine starke Verzerrung des Magnetfeldes eines Magnetpaares durch ein zweites Ableitelement am Magnetfeldsensor vermieden werden.

Bei typischen Ausführungsformen ist die erste Richtung axial ausgerichtet. Insbesondere sind je Magnetpaar der erste Magnet, das Magnetband und der zweite Magnet axial in dieser Reihenfolge an dem rotierbaren Teil angeordnet. Typischerweise sind je Magnetpaar der erste Magnet und der zweite Magnet in einer Ebene mit der Drehachse angeordnet. Typischerweise sind der erste Magnet und der zweite Magnet axial versetzt zueinander angeordnet. Eine axiale Ausführungsform kann beispielsweise den Vorteil aufweisen, dass das Gebersystem mit besonders geringem Durchmesser verbaut werden kann oder dass das Gebersystem zerstörungsfrei bei axialer Verschiebung der Welle sein kann.

Bei typischen Ausführungsformen ist das mindestens eine erste Ableitelement je Magnetpaar axial zwischen dem ersten Magneten und dem Magnetband oder axial zwischen dem zweiten Magneten und dem Magnetband angeordnet. Bei typischen Ausführungsformen ist das zweite Ableitelement radial außerhalb des Magnetfeldsensors angeordnet. Bei typischen Ausführungsformen ist das zweite Ableitelement in radialer Richtung weiter außen als der Magnetfeldsensor angeordnet, insbesondere am feststehenden Teil. Beispielsweise ist die Abfolge von radial innen nach radial außen: Magnetband, Magnetfeldsensor, zweites Ableitelement. Die Begriffe "radial", "tangential" und "axial" beziehen sich hierin typischerweise auf die Drehachse.

Bei typischen Ausführungsformen ist der Träger als Hülse ausgeführt, wobei die Hülse zur drehfesten Verbindung mit einer Welle des Antriebs eingerichtet ist. Die Hülse ist typischerweise zumindest teilweise radial innerhalb der Magnetpaare oder radial innerhalb des Magnetbandes angeordnet. Insbesondere ist die Hülse typischerweise zumindest teilweise radial innerhalb der Magnetpaare und radial innerhalb des Magnetbandes angeordnet.

Bei typischen Ausführungsformen ist die Hülse einteilig ausgeführt. In anderen Ausführungsformen ist die Hülse zweiteilig ausgeführt, insbesondere kann auf beiden Teilen der Hülse jeweils zumindest eines oder alle Elemente angeordnet sein von: ein erstes Ableitelement, ein Magnet eines Magnetpaares und eine Spur des Magnetbandes.

Bei weiteren typischen Ausführungsformen des Gebersystems ist die erste Richtung radial ausgerichtet. Insbesondere sind je Magnetpaar der erste Magnet und der zweite Magnet radial versetzt zueinander angeordnet. Insbesondere ist das Magnetband je Magnetpaar radial zwischen dem ersten Magneten und dem zweiten Magneten angeordnet. Radiale Ausführungsformen können insbesondere eine axial besonders flache Bauweise ermöglichen.

Bei typischen Ausführungsformen ist das mindestens eine erste Ableitelement je Magnetpaar radial zwischen dem ersten Magneten und dem Magnetband oder radial zwischen dem zweiten Magneten und dem Magnetband angeordnet. Bei typischen Ausführungsformen sind das zweite Ableitelement, der Magnetfeldsensor und das Magnetband bezüglich einer axialen Richtung in dieser Reihenfolge angeordnet.

Bei typischen Ausführungsformen ist der Träger als Scheibe ausgeführt, wobei die Scheibe zur drehfesten Verbindung mit der Welle eingerichtet ist. Typischerweise ist die Scheibe koaxial mit der Drehachse des Gebersystems angeordnet.

Typische Ausführungsformen umfassen einen Elektromotor mit einer Welle und einem Gebersystem nach hierin beschriebenen Ausführungsformen. Typischerweise ist der feststehende Teil des Gebersystems drehfest mit einem Gehäuse des Elektromotors verbunden. Der rotierbare Teil des Gebersystems ist typischerweise drehfest mit der Welle des Elektromotors verbunden. Die Welle des Elektromotors kann mit weiteren Permanentmagneten bestückt sein, beispielsweise mit weiteren Permanentmagneten eines Rotors des Elektromotors.

Bei typischen Ausführungsformen ist die Welle des Elektromotors als Hohlwelle, insbesondere als durchgehende Hohlwelle, ausgeführt. Eine Hohlwelle kann beispielsweise den Vorteil bieten, dass Kabel bauraumsparend durch die Hohlwelle geführt werden können. Bei weiteren typischen Ausführungsformen ist die Welle als Vollwelle ausgeführt.

Typische Ausführungsformen, welche insbesondere mit hierin beschriebenen typischen Gebersystemen kombinierbar sind, betreffen ein Gebersystem mit einem Umdrehungszähler. Der Umdrehungszähler umfasst einen ersten Sensor, wobei der erste Sensor auf einer ersten Sensorplatine des Gebersystems angeordnet ist. Der erste Sensor ist typischerweise ein Wiegandsensor. Der Wiegandsensor kann zum Beispiel als SMD-Bauteil ausgeführt sein. Das Gebersystem umfasst typischerweise einen Positionsgeber mit einem zweiten Sensor, wobei der zweite Sensor auf einer zweiten Sensorplatine des Gebersystems angeordnet ist. Der zweite Sensor ist typischerweise ein Magnetfeldsensor gemäß hierin beschriebenen Ausführungsformen. Die zweite Sensorplatine kann weitere elektrische Hilfsbauteile tragen, z.B. einen Widerstand, einen Kondensator oder einen Speicherchip. Die zweite Sensorplatine kann insbesondere ein zweites Ableitelement gemäß hierin beschriebenen Ausführungsformen tragen. Das zweite Ableitelement ist typischerweise mit der zweiten Sensorplatine verbunden, beispielsweise verlötet oder verklebt.

Typische Gebersysteme umfassen eine Basisplatine, welche zur Verbindung mit einem Gehäuse des Antriebs eingerichtet ist. Bei Ausführungsformen stellt die Basisplatine eine elektrische Verbindung der ersten Sensorplatine und der zweiten Sensorplatine untereinander durch Leiterbahnen auf der Basisplatine bereit. Typischerweise umfasst die Basisplatine verschiedene elektrische Bauteile, beispielsweise elektrische Schutzbeschaltung oder Spannungsregler. Bei typischen Ausführungsformen stellt die Basisplatine eine elektrische Schnittstelle, beispielsweise einen Platinenstecker, zur Energieversorgung des Gebersystems oder zur kommunikativen Verbindung der Basisplatine mit einer Auswerteelektronik des Gebersystems bereit.

Typischerweise sind die erste Sensorplatine und die zweite Sensorplatine mit der Basisplatine unmittelbar verbunden. Insbesondere sind die erste Sensorplatine und die zweite Sensorplatine nicht zerstörungsfrei von der Basisplatine lösbar. Die erste Sensorplatine oder die zweite Sensorplatine können beispielsweise über eine Steckverbindung, eine Klebeverbindung oder eine Lötverbindung mit der Basisplatine verbunden sein. Eine elektrische Verbindung zwischen der ersten Sensorplatine und der Basisplatine oder zwischen der zweiten Sensorplatine und der Basisplatine können über eine Lötverbindung oder über eine Kabelverbindung bereitgestellt werden. In weiteren Ausführungsformen können die erste Sensorplatine, die zweite Sensorplatine und die Basisplatine als starrflexible Leiterplatten ausgeführt sein.

Bei typischen Ausführungsformen sind die erste Sensorplatine oder die zweite Sensorplatine, insbesondere beide, jeweils zumindest im Wesentlichen axial ausgerichtet, insbesondere zumindest im Wesentlichen axial und in einem Punkt des jeweiligen Sensors zumindest im Wesentlichen tangential bezüglich der Drehachse des Gebersystems. Typischerweise ist die Basisplatine zumindest im Wesentlichen senkrecht zur Drehachse ausgerichtet. Unter "zumindest im Wesentlichen" ist insbesondere eine Abweichung von höchstens 20°, insbesondere von höchstens 10° oder von höchstens 5°, von einer genau axialen, tangentialen oder radialen Ausrichtung zu verstehen. Bei typischen Ausführungsformen sind die erste Sensorplatine oder die zweite Sensorplatine, insbesondere beide, zumindest im Wesentlichen senkrecht zu der Basisplatine ausgerichtet.

Typische Ausführungsformen des Gebersystems können gegenüber dem Stand der Technik den Vorteil bieten, dass eine besonders kompakte Bauform bereitgestellt wird. Insbesondere können Ausführungsformen einen geringen Durchmesser oder eine geringe axiale Dicke aufweisen. Ausführungsformen können weiterhin den Vorteil bieten, dass eine Absolutposition mit hoher Genauigkeit bestimmt werden kann. Ein weiterer Vorteil typischer Ausführungsformen kann sein, dass der Magnetfeldsensor gegen Störfelder abgeschirmt ist, insbesondere gegen Streufelder des Umdrehungszählers oder gegen äußere Störfelder.

### Kurze Beschreibung der Zeichnungen

Weitere Vorteile und Merkmale bevorzugter Ausführungsformen der Erfindung werden nachfolgend anhand der beiliegenden Zeichnungen erläutert, wobei die Figuren zeigen:
- Fig. 1: zeigt eine schematische Schnittansicht eines typischen Gebersystems;
- Fig. 2: zeigt eine schematische Schnittansicht eines typischen Gebersystems, insbesondere eine Ansicht auf Schnittfläche A der Fig. 1;
- Fig. 3: zeigt eine schematische Schnittansicht eines typischen Gebersystems, insbesondere eine Ansicht auf Schnittfläche B der Fig. 1;
- Fig. 4: zeigt eine schematische Schnittansicht eines weiteren typischen Gebersystems.

### Beschreibung von Ausführungsformen

Nachfolgend werden typische Ausführungsformen anhand der Figuren beschrieben, wobei die Erfindung nicht auf die Ausführungsbeispiele beschränkt ist, vielmehr wird der Umfang der Erfindung durch die Ansprüche bestimmt.

Bei der Beschreibung der Figuren werden die gleichen Bezugszeichen für gleiche oder ähnliche Teile verwendet. Teilweise werden Merkmale, welche bereits im Zusammenhang mit anderen Figuren beschrieben wurden, der Übersichtlichkeit halber nicht nochmals beschrieben.

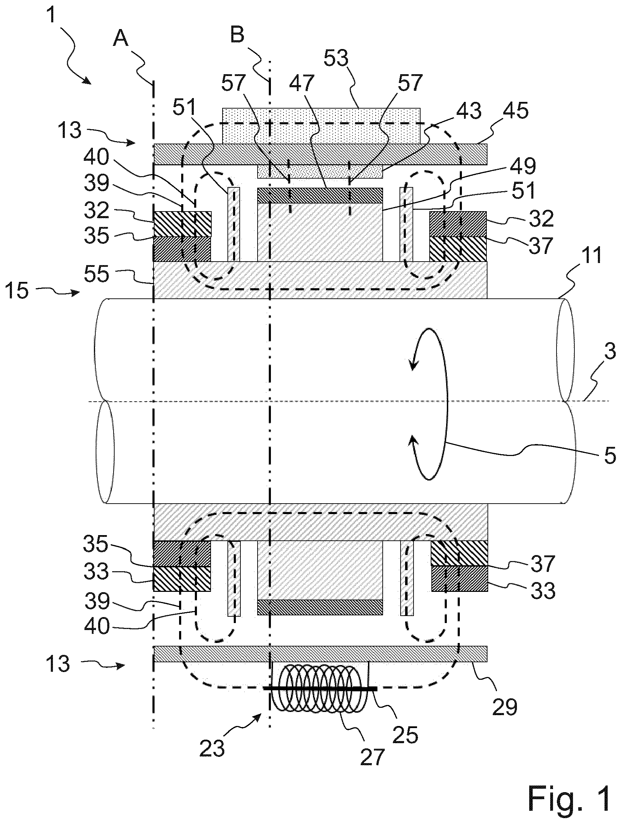

Fig. 1 zeigt eine schematische Schnittansicht eines typischen Gebersystems 1 entlang einer Drehachse 3 des Gebersystems 1. Das Gebersystem 1 umfasst einen feststehenden Teil 13 und einen rotierbaren Teil 15. Der feststehende Teil 13 ist zur drehfesten Verbindung mit einem Gehäuse eines Antriebs eingerichtet. Der rotierbare Teil 15 ist mit einer Welle 11 des Antriebs verbunden. Die Welle 11 und der rotierbare Teil 15 sind um die Drehachse 3 rotierbar. Die in Figuren 1 bis 4 dargestellten Ausführungsformen zeigen insbesondere solche Ausführungsformen eines Gebersystems, bei welchen eine erste Richtung des Gebersystems axial ausgerichtet ist.

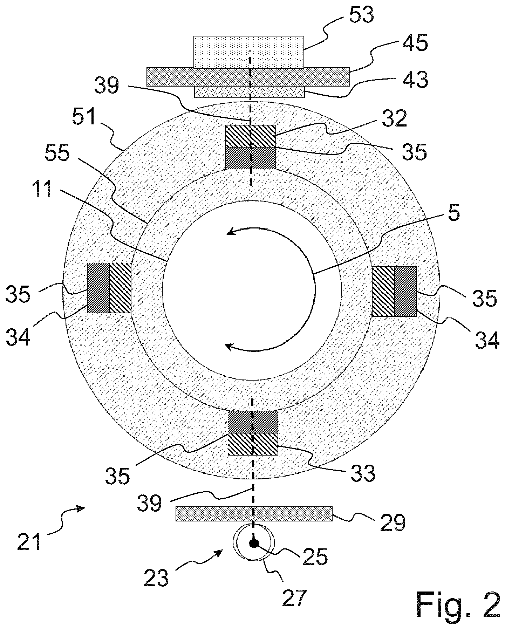

Das Gebersystem 1 umfasst einen Umdrehungszähler, welcher im Folgenden insbesondere in Zusammenhang mit Figuren 1 und 2 beschrieben wird. Fig. 2 zeigt insbesondere eine Ansicht auf Schnittfläche A der Fig. 1. In der Fig. 2 ist der Umdrehungszähler allgemein mit dem Bezugszeichen 21 versehen. Der Umdrehungszähler umfasst einen Wiegandsensor 23, welcher an dem feststehenden Teil 13 angeordnet ist, insbesondere an einer ersten Sensorplatine 29. Der Wiegandsensor 23 umfasst einen Wiegand-Draht 25 und eine Wiegandspule 27. Die Wiegandspule 27 ist um den Wiegand-Draht 25 gewunden.

Der Umdrehungszähler umfasst Magnetpaare, welche an dem rotierbaren Teil 15 angeordnet sind. Insbesondere sind die Magnetpaare auf einem Träger 55 des Gebersystems 1 angeordnet, wobei der Träger 55 in Fig. 1 beispielhaft als Hülse ausgeführt ist. Der Träger 55 ist aus magnetisch leitfähigem Material hergestellt, insbesondere aus ferromagnetischem Material. Im Ausführungsbeispiel der Figuren 1 und 2 sind vier Magnetpaare an dem rotierbaren Teil 15 angeordnet. Insbesondere umfassen die Magnetpaare ein erstes Magnetpaar 32, welches sich in den Figuren 1 und 2 in einer Position nahe eines Magnetfeldsensors 43 befindet, ein zweites Magnetpaar 33 an einer Position nahe des Wiegandsensors 23 und zwei weitere Magnetpaare 34, welche einander gegenüberliegend und jeweils zwischen dem ersten Magnetpaar 32 und dem zweiten Magnetpaar 33 angeordnet sind (Fig. 2). Die Magnetpaare sind in Umlaufrichtung 5 gleichmäßig verteilt angeordnet mit einem Winkelabstand von 90° zwischen in Umlaufrichtung 5 benachbarten Magnetpaaren.

Die Magnetpaare umfassen jeweils einen ersten Magneten 35 und einen zweiten Magneten 37. Je Magnetpaar weisen der erste Magnet 35 und der zweite Magnet 37 antiparallele magnetische Dipolmomente auf. Die Magnetpaare weisen in Umlaufrichtung 5 eine wechselnde Polarität auf. Wie in Fig. 2 dargestellt, weisen beispielsweise die ersten Magneten 35 in Umlaufrichtung 5 eine wechselnde Polarität auf. Insbesondere sind die ersten Magneten 35 so ausgerichtet, dass die ersten Magnete 35 in Umlaufrichtung 5 abwechselnd mit einem Nordpol oder mit einem Südpol radial nach außen gerichtet sind. Auch die zweiten Magneten 37 weisen in Umlaufrichtung 5 eine wechselnde Polarität auf.

Je Magnetpaar bilden der erste Magnet 35 und der zweite Magnet 37 einen Magnetkreis mit ersten Feldlinien 39 aus. Ein von einem Magnetpaar erzeugter Magnetkreis ist dazu geeignet, bei einer Drehung des Magnetpaares hin zu der Position des Wiegandsensors 23 den Wiegand-Draht 25 umzupolen. Das Umpolen des Wiegand-Drahtes 25 kann einen Spannungspuls in der Wiegandspule 27 induzieren. Der Spannungspuls kann als Zählsignal zum Zählen der Umdrehungen dienen, in Fig. 1 beispielsweise zum Erfassen von Viertelumdrehungen. In einem spannungslosen Zustand des Gebersystems kann der Spannungspuls weiterhin dazu dienen, das Zählsignal oder ein Zählergebnis in einem nichtflüchtigen Speicher des Gebersystems 1 zu speichern.

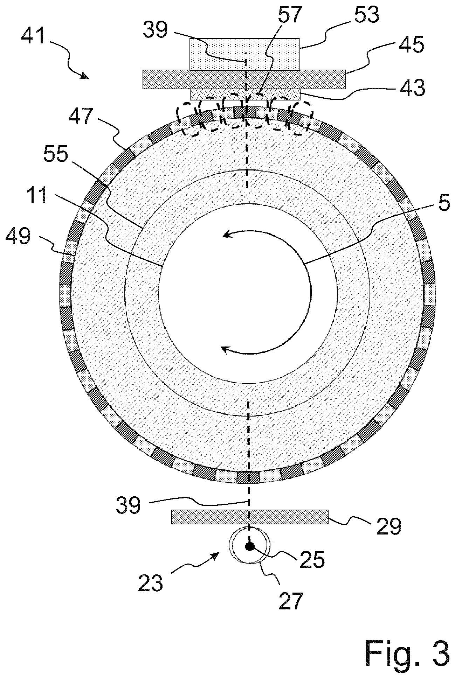

Das Gebersystem 1 umfasst einen Positionsgeber, wie insbesondere in Figuren 1 und 3 dargestellt. Fig. 3 zeigt eine Ansicht auf die Schnittfläche B der Fig. 1. In der Fig. 3 ist der Positionsgeber allgemein mit dem Bezugszeichen 41 versehen. Der Positionsgeber umfasst den Magnetfeldsensor 43, beispielsweise ein Hall-Sensor-Array. Der Magnetfeldsensor 43 ist an dem feststehenden Teil 13 des Gebersystems 1 angeordnet, insbesondere an einer zweiten Sensorplatine 45 des Gebersystems 1. Der Magnetfeldsensor 43 ist in Umlaufrichtung 5 um 180° versetzt zu dem Wiegandsensor 23 angeordnet dargestellt.

Bei weiteren Ausführungsformen ist der Magnetfeldsensor in Umlaufrichtung um weniger als 180°angeordnet.

Der Positionsgeber umfasst ein Magnetband 47, welches an dem rotierbaren Teil 15 angeordnet ist. Insbesondere ist das Magnetband 47 auf einem Magnetbandträger 49 angeordnet. Der Magnetbandträger 49 ist axial mittig und drehfest mit dem Träger 55 verbunden. In den Figuren 1 und 3 weist das Magnetband 47 zwei Magnetspuren mit einer Nonius-Codierung (Vernier-Codierung) auf. Insbesondere ist in der Schnittansicht der Fig. 3 eine Magnetspur mit Abschnitten wechselnder Polarität dargestellt. Im Ausführungsbeispiel der Fig. 3 weist eine Magnetspur beispielsweise 63 Polpaaren auf, wobei zur Vereinfachung eine geringere Anzahl dargestellt wurde. Eine weitere nicht dargestellte Magnetspur weist beispielsweise 64 Polpaare auf. Der Magnetfeldsensor 43 ist eingerichtet, Magnetfelder des Magnetbandes 47 zu messen, beispielsweise die in Figuren 1 und 3 schematisch dargestellten zweiten Feldlinien 57 der zwei Magnetspuren des Magnetbandes 47.

Typischerweise ist ein Positionsgeber mit einem Magnetband mit Nonius-Codierung eingerichtet, für die Magnetspuren jeweils eine Phase basierend auf Magnetfeldmessungen des Magnetfeldsensors zu bestimmen. Eine Phase gibt beispielsweise eine Winkelposition eines dem Magnetfeldsensor nahegelegenen oder nächstgelegenen Pols des Magnetbandes an. Aufgrund der unterschiedlichen Teilung der Magnetspuren nach dem Nonius-Prinzip besteht zwischen den Phasen der Magnetspuren eine eindeutige Phasenbeziehung, aus der die Absolutposition der Welle basierend auf den Phasen der Magnetspuren berechnet werden kann. Bei weiteren Ausführungsformen kann eine Absolutposition basierend auf einer Gray-Codierung eines Magnetbandes berechnet werden.

In Fig. 1 sind je Magnetpaar der erste Magnet 35, das Magnetband 47 und der zweite Magnet 37 bezüglich einer ersten Richtung, in Fig. 1 bezüglich einer axialen Richtung, in dieser Reihenfolge angeordnet. Insbesondere ist das Magnetband 47 je Magnetpaar axial zwischen dem ersten Magneten 35 und dem zweiten Magneten 37 angeordnet.

Zwischen den ersten Magneten 35 und dem Magnetband 47 und zwischen den zweiten Magneten 37 und dem Magnetband 47 ist jeweils ein erstes Ableitelement 51 an dem rotierbaren Teil 15 angeordnet. Insbesondere sind die ersten Ableitelemente 51 an dem Träger 55 angeordnet. In den Figuren 1 und 2 sind die ersten Ableitelemente 51 jeweils als Scheibe und um den Träger 55 umlaufend ausgeführt. Die ersten Ableitelemente 51 sind dazu eingerichtet, von den Magnetpaaren ausgehende Streufelder, beispielsweise Streulinien 40, abzuleiten, insbesondere in eine zweite Richtung, welche senkrecht zu der ersten Richtung gerichtet ist. So können Streufelder mit Streulinien 40 beispielsweise über die ersten Ableitelemente 51 und den Träger 55 kurzgeschlossen und insbesondere von dem Magnetfeldsensor 43 und dem Magnetband 47 ferngehalten werden.

Das Gebersystem 1 umfasst ein zweites Ableitelement 53. Das zweite Ableitelement 53 ist an dem feststehenden Teil 13 des Gebersystems 1 angeordnet, insbesondere mit der zweiten Sensorplatine 45 fest verbunden, beispielsweise verklebt. Das zweite Ableitelement 53 ist radial außerhalb des Magnetfeldsensors 43 angeordnet. Insbesondere ist der Magnetfeldsensor 43 bezüglich einer radialen, zweiten Richtung zwischen dem zweiten Ableitelement 53 und dem Magnetband 47 angeordnet. In Fig. 1 ist das zweite Ableitelement 53 als Ferritblock ausgeführt. Das zweite Ableitelement 53 erstreckt sich in Fig. 1 axial beidseitig über einen axialen Bereich zwischen den zwei ersten Ableitelementen 51 hinaus.

In Fig. 1 bilden die ersten Ableitelemente 51, das zweite Ableitelement 53 und der Träger 55 ein Abschirmsystem zum Abschirmen oder Ableiten von magnetischen Störfeldern. Durch ein Ableiten der Störfelder, insbesondere der Streufelder der Magnetpaare, können das Magnetband 47 und der Magnetfeldsensor 43 abgeschirmt werden. Beispielsweise kann durch die Abschirmung eine genaue Bestimmung der Absolutposition ermöglicht werden. Insbesondere führt das Abschirmsystem einen durch ein Magnetpaar erzeugten Magnetkreis an der Position des Magnetfeldsensors 43 um den Magnetfeldsensor 43 herum. Weitere Streufelder des Magnetpaares in Richtung des Magnetfeldsensors 43 werden insbesondere durch die ersten Ableitelemente 51 in eine zweite Richtung abgeleitet. Das Abschirmsystem erlaubt eine Anordnung des Gebersystems, bei welcher an der Position des Magnetfeldsensors 43 ein schwacher Magnetkreis (zweite Feldlinien 57) des Positionsgebers in einen starken Magnetkreis (erste Feldlinien 39) des Umdrehungszählers verschachtelt ist. Insbesondere können der schwache Magnetkreis und der starke Magnetkreis zur Bestimmung der Absolutposition ausreichend voneinander entkoppelt sein. Beispielsweise kann ein besonders bauraumsparendes Gebersystem bereitgestellt werden.

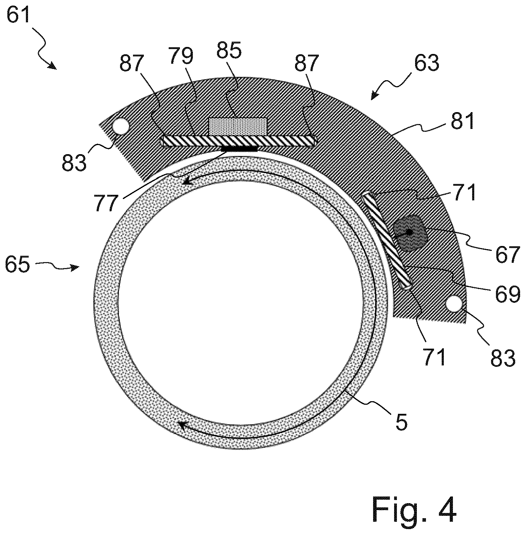

Fig. 4 zeigt eine schematische Schnittansicht eines Gebersystems 61. In Fig. 4 ist ein rotierbarer Teil 65 des Gebersystems 61 der Übersichtlichkeit halber vereinfacht dargestellt. Das Gebersystem 61 umfasst einen feststehenden Teil 63 mit einer Basisplatine 81, welche zur drehfesten Verbindung mit einem Gehäuse eines Antriebs eingerichtet ist. Insbesondere weist die Basisplatine 81 Befestigungslöcher 83 auf. Die Befestigungslöcher 83 sind eingerichtet zur Befestigung, beispielsweise zum Festschrauben, der Basisplatine 81 an dem Gehäuse des Antriebs.

Das Gebersystem 61 umfasst einen Umdrehungszähler mit einem ersten Sensor 67, in Fig. 4 beispielsweise einem Wiegandsensor in einer der hierin beschriebenen Ausführungsformen. Der erste Sensor 67 ist auf einer ersten Sensorplatine 69 angeordnet. Die erste Sensorplatine 69 ist über erste Steckverbindungen 71 mechanisch mit der Basisplatine 81 verbunden Die ersten Steckverbindungen 71 sind durch Nasen der ersten Sensorplatine 69, welche in Öffnungen der Basisplatine 81 eingreifen, bereitgestellt. Zusätzlich sind elektrische Kontakte der ersten Sensorplatine 69 und der Basisplatine 81 miteinander verlötet.

In Fig. 4 umfasst das Gebersystem 61 einen Positionsgeber mit einem zweiten Sensor 77, beispielsweise einem Magnetfeldsensor in einer der hierin beschriebenen Ausführungsformen. Der zweite Sensor 77 ist auf einer zweiten Sensorplatine 79 angeordnet. In der beispielhaften Ausführungsform der Fig. 4 ist ein zweites Ableitelement 85 radial außerhalb des zweiten Sensors 77 auf der zweiten Sensorplatine 79 angeordnet. Die zweite Sensorplatine 79 ist über zweite Steckverbindungen 87 mechanisch mit der Basisplatine 81 verbunden. Die zweiten Steckverbindungen 87 sind durch Nasen der zweiten Sensorplatine 79, welche in Öffnungen der Basisplatine 81 eingreifen, bereitgestellt. Elektrische Kontakte der zweiten Sensorplatine 79 und der Basisplatine 81 sind miteinander verlötet.

Die erste Sensorplatine 69 und die zweite Sensorplatine 79 sind jeweils senkrecht zu der Basisplatine 81 ausgerichtet. Insbesondere ist die erste Sensorplatine 69 in einem Punkt des ersten Sensors 67 im Wesentlichen tangential bezüglich der Drehachse des Gebersystems 61 ausgerichtet. Die zweite Sensorplatine 79 ist in einem Punkt des zweiten Sensors 77 im Wesentlichen tangential bezüglich der Drehachse ausgerichtet.

Ein Gebersystem gemäß Ausführungsformen kann beispielsweise einfach montiert werden, flexibel an unterschiedliche Antriebe angepasst werden oder kostengünstig hergestellt werden.

Merkmale der Ausführungsbeispiele der Fig. 1 - 4 können miteinander kombiniert werden, insbesondere können bei einem Gebersystem mit einer Platinenanordnung gemäß Ausführungsbeispiel der Fig. 4 Merkmale verwendet werden, welche im Zusammenhang mit anderen hierin offenbarten Gebersystemen beschrieben sind.

## Patentansprüche

1. Gebersystem (1) für einen Antrieb, umfassend:
- einen Umdrehungszähler mit
• einem an einem feststehenden Teil (13) des Gebersystems (1) angeordneten Wiegandsensor (23) und
• mindestens zwei an verschiedenen Positionen in Umlaufrichtung (5) an einem rotierbaren Teil (15) des Gebersystems (1) angeordneten Magnetpaaren,
• wobei die Magnetpaare jeweils einen ersten Magneten (35) und einen zweiten Magneten (37) umfassen; und
- einen Positionsgeber mit einem an dem feststehenden Teil (13) angeordneten Magnetfeldsensor (43) und einem an dem rotierbaren Teil (15) angeordneten Magnetband (47);
wobei je Magnetpaar der erste Magnet (35), das Magnetband (47) des Positionsgebers und der zweite Magnet (37) bezüglich einer ersten Richtung in dieser Reihenfolge an dem rotierbaren Teil (15) angeordnet sind.

2. Gebersystem (1) nach Anspruch 1, umfassend mindestens ein zwischen dem jeweils ersten Magneten (35) und dem Magnetband (47) und/oder zwischen dem jeweils zweiten Magneten (37) und dem Magnetband (47) angeordnetes erstes Ableitelement (51) aus magnetisch leitfähigem Material.

3. Gebersystem (1) nach Anspruch 1 oder 2, umfassend ein an dem feststehenden Teil (13) angeordnetes zweites Ableitelement (53) aus magnetisch leitfähigem Material, wobei der Magnetfeldsensor (43) bezüglich einer zweiten Richtung, welche zumindest im Wesentlichen senkrecht zu der ersten Richtung ausgerichtet ist, zwischen dem Magnetband (47) und dem zweiten Ableitelement (53) angeordnet ist.

4. Gebersystem (1) nach einem der vorhergehenden Ansprüche, wobei der Wiegandsensor (23) und der Magnetfeldsensor (43) in Umlaufrichtung (5) um die Drehachse (3) des rotierbaren Teils (15) versetzt zueinander angeordnet sind.

5. Gebersystem (1) nach einem der vorhergehenden Ansprüche, wobei das Magnetband (47) mindestens zwei Magnetspuren umfasst.

6. Gebersystem (1) nach einem der vorhergehenden Ansprüche, wobei das Verhältnis einer ersten magnetischen Remanenzinduktion des Magnetbandes (47) zu einer zweiten magnetischen Remanenzinduktion eines ersten Magneten (35) eines Magnetpaars oder eines zweiten Magneten (37) eines Magnetpaars mindestens 1:15 und höchstens 1:2 beträgt.

7. Gebersystem (1) nach einem der vorhergehenden Ansprüche, wobei der rotierbare Teil (15) einen Träger (55) aus magnetisch leitfähigem Material umfasst, und wobei das Magnetband (47) und die mindestens zwei Magnetpaare auf dem Träger (55) angeordnet sind.

8. Gebersystem (1) nach einem der Ansprüche 2 bis 7, wobei der Magnetfeldsensor (43) durch ein Abschirmsystem des Gebersystems (1) gegen magnetische Störfelder abgeschirmt ist, wobei das Abschirmsystem mindestens eines aus der Gruppe des mindestens einen ersten Ableitelements (51), des zweiten Ableitelements (53) und des Trägers (55) umfasst.

9. Gebersystem (1) nach einem der vorhergehenden Ansprüche, wobei die erste Richtung axial ausgerichtet ist.

10. Gebersystem (1) nach Anspruch 9, wobei der Träger (55) als Hülse ausgeführt ist, wobei die Hülse zur drehfesten Verbindung mit einer Welle (11) des Antriebs eingerichtet ist.

11. Gebersystem (1) nach einem der Ansprüche 1 bis 8, wobei die erste Richtung radial ausgerichtet ist.

12. Gebersystem (1) nach Anspruch 11, wobei der Träger (55) als Scheibe ausgeführt ist, wobei die Scheibe zur drehfesten Verbindung mit der Welle (11) eingerichtet ist.

13. Gebersystem (61) nach einem der vorhergehenden Ansprüche, weiter umfassend:
- eine erste Sensorplatine (69), wobei der Wiegandsensor (23) auf der ersten Sensorplatine (69) angeordnet ist;
- eine zweite Sensorplatine (79), wobei der Magnetfeldsensor (43) auf der zweiten Sensorplatine (79) angeordnet ist; und
- eine Basisplatine (81), welche zur Verbindung mit einem Gehäuse des Antriebs eingerichtet ist;
wobei die erste Sensorplatine (69) und die zweite Sensorplatine (79) mit der Basisplatine (81) unmittelbar verbunden sind.

14. Elektromotor, mit
- einer Welle (11) und
- einem Gebersystem (1) nach einem der vorhergehenden Ansprüche.

15. Elektromotor nach Anspruch 14, wobei die Welle (11) als Hohlwelle ausgeführt ist.

## Claims

1. Transducer system (1) for a drive, comprising:
- a revolution counter having
• a Wiegand sensor (23) arranged on a stationary part (13) of the transducer system (1), and
• at least two magnet pairs arranged at different positions in the circumferential direction (5) on a rotatable part (15) of the transducer system (1),
• wherein the magnet pairs each comprise a first magnet (35) and a second magnet (37); and
- a position transducer having a magnetic field sensor (43) arranged on the stationary part (13) and a magnetic strip (47) arranged on the rotatable part (15);
wherein for each magnet pair, the first magnet (35), the magnetic strip (47) of the position transducer, and the second magnet (37) are arranged on the rotatable part (15) in this order with respect to a first direction.

2. Transducer system (1) according to claim 1, comprising at least one first discharge element (51) which is made of a magnetically conductive material and is arranged between the relevant first magnet (35) and the magnetic strip (47) and/or between the relevant second magnet (37) and the magnetic strip (47).

3. Transducer system (1) according to either claim 1 or claim 2, comprising a second discharge element (53) which is made of a magnetically conductive material and is arranged on the stationary part (13), wherein the magnetic field sensor (43) is arranged between the magnetic strip (47) and the second discharge element (53) with respect to a second direction which is oriented at least substantially perpendicularly to the first direction.

4. Transducer system (1) according to any of the preceding claims, wherein the Wiegand sensor (23) and the magnetic field sensor (43) are arranged so as to be offset with respect to one another in the circumferential direction (5) about the axis of rotation (3) of the rotatable part (15).

5. Transducer system (1) according to any of the preceding claims, wherein the magnetic strip (47) comprises at least two magnetic tracks.

6. Transducer system (1) according to any of the preceding claims, wherein the ratio of a first residual magnetic induction of the magnetic strip (47) to a second residual magnetic induction of a first magnet (35) of a magnet pair or a second magnet (37) of a magnet pair is at least 1:15 and at most 1:2.

7. Transducer system (1) according to any of the preceding claims, wherein the rotatable part (15) comprises a carrier (55) made of a magnetically conductive material, and wherein the magnetic strip (47) and the at least two magnet pairs are arranged on the carrier (55).

8. Transducer system (1) according to any of claims 2 to 7, wherein the magnetic field sensor (43) is shielded from magnetic interference fields by a shielding system of the transducer system (1), wherein the shielding system comprises at least one of the group of the at least one first discharge element (51), the second discharge element (53) and the carrier (55).

9. Transducer system (1) according to any of the preceding claims, wherein the first direction is axially oriented.

10. Transducer system (1) according to claim 9, wherein the carrier (55) is designed as a sleeve, wherein the sleeve is designed to connect to a shaft (11) of the drive in a rotationally fixed manner.

11. Transducer system (1) according to any of claims 1 to 8, wherein the first direction is radially oriented.

12. Transducer system (1) according to claim 11, wherein the carrier (55) is designed as a disc, wherein the disc is designed to connect to the shaft (11) in a rotationally fixed manner.

13. Transducer system (61) according to any of the preceding claims, further comprising:
- a first sensor board (69), wherein the Wiegand sensor (23) is arranged on the first sensor board (69);
- a second sensor board (79), wherein the magnetic field sensor (43) is arranged on the second sensor board (79); and
- a base board (81) which is designed to connect to a housing of the drive;
wherein the first sensor board (69) and the second sensor board (79) are directly connected to the base board (81).

14. Electric motor, comprising
- a shaft (11) and
- a transducer system (1) according to any of the preceding claims.

15. Electric motor according to claim 14, wherein the shaft (11) is designed as a hollow shaft.

## Revendications

1. Système de capteurs (1) pour un entraînement, comprenant :
- un compteur de révolutions comportant
• un capteur Wiegand (23) disposé sur une partie fixe (13) du système de capteurs (1) et
• au moins deux paires d'aimants disposées à différentes positions dans le sens de rotation (5) sur une partie rotative (15) du système de capteurs (1),
• les paires d'aimants comprenant respectivement un premier aimant (35) et un second aimant (37) ; et
- un capteur de position comprenant un capteur de champ magnétique (43) disposé sur la partie fixe (13) et une bande magnétique (47) disposée sur la partie rotative (15) ;
dans lequel, pour chaque paire d'aimants, le premier aimant (35), la bande magnétique (47) du capteur de position et le second aimant (37) sont disposés dans cet ordre, par rapport à une première direction, sur la partie rotative (15).

2. Système de capteurs (1) selon la revendication 1, comprenant au moins un premier élément de dérivation (51), en matériau magnétiquement conducteur, disposé entre le premier aimant (35) et la bande magnétique (47) et/ou entre le second aimant (37) et la bande magnétique (47).

3. Système de capteurs (1) selon la revendication 1 ou 2, comprenant un second élément de dérivation (53), en matériau magnétiquement conducteur, disposé sur la partie fixe (13), le capteur de champ magnétique (43) étant disposé par rapport à une seconde direction, laquelle est au moins essentiellement orientée perpendiculairement à la première direction, entre la bande magnétique (47) et le second élément de dérivation (53).

4. Système de capteurs (1) selon l'une quelconque des revendications précédentes, dans lequel le capteur Wiegand (23) et le capteur de champ magnétique (43) sont disposés décalés l'un par rapport à l'autre dans le sens de rotation (5) autour de l'axe de rotation (3) de la partie rotative (15).

5. Système de capteurs (1) selon l'une quelconque des revendications précédentes, dans lequel la bande magnétique (47) comprend au moins deux pistes magnétiques.

6. Système de capteurs (1) selon l'une quelconque des revendications précédentes, dans lequel le rapport d'une première induction rémanente magnétique de la bande magnétique (47) à une seconde induction rémanente magnétique d'un premier aimant (35) d'une paire d'aimants ou d'un second aimant (37) d'une paire d'aimants est d'au moins 1:15 et d'au plus 1:2.

7. Système de capteurs (1) selon l'une quelconque des revendications précédentes, dans lequel la partie rotative (15) comprend un support (55) en matériau magnétiquement conducteur, et dans lequel la bande magnétique (47) et les au moins deux paires d'aimants sont disposées sur le support (55).

8. Système de capteurs (1) selon l'une quelconque des revendications 2 à 7, dans lequel le capteur de champ magnétique (43) est blindé contre les champs magnétiques parasites par un système de blindage du système de capteurs (1), le système de blindage comprenant au moins un élément du groupe constitué par l'au moins un premier élément de dérivation (51), le second élément de dérivation (53) et le support (55).

9. Système de capteurs (1) selon l'une quelconque des revendications précédentes, dans lequel la première direction est orientée dans le sens axial.

10. Système de capteurs (1) selon la revendication 9, dans lequel le support (55) est réalisé sous forme de douille, la douille étant conçue pour une liaison en rotation avec un arbre (11) de l'entraînement.

11. Système de capteurs (1) selon l'une quelconque des revendications 1 à 8, dans lequel la première direction est orientée dans le sens radial.

12. Système de capteurs (1) selon la revendication 11, dans lequel le support (55) est réalisé sous forme de disque, le disque étant conçu pour une liaison en rotation avec l'arbre (11).

13. Système de capteurs (61) selon l'une quelconque des revendications précédentes, comprenant en outre :
- une première platine de capteur (69), le capteur Wiegand (23) étant disposé sur la première platine de capteur (69) ;
- une seconde platine de capteur (79), le capteur de champ magnétique (43) étant disposé sur la seconde platine de capteur (79) ;
- une platine de base (81), laquelle est conçue pour la liaison avec un boîtier de l'entraînement ;
la première platine de capteur (69) et la seconde platine de capteur (79) étant directement liées à la platine de base (81).

14. Moteur électrique, comportant
- un arbre (11), et
- un système de capteurs (1) selon l'une quelconque des revendications précédentes.

15. Moteur électrique selon la revendication 14, dans lequel l'arbre (11) est réalisé sous forme d'arbre creux.
